# EUROPEAN PATENT SPECIFICATION

(11) **EP 3 627 505 B1**
(45) Date of publication and mention of the grant of the patent: **15.11.2023**
(21) Application number: 18196004.8
(22) Date of filing: 21.09.2018
(51) Int. Cl.: G10L 17/00, H04M 3/56, G10L 25/87, H04M 3/42

(54) **REAL-TIME SPEAKER IDENTIFICATION WITH DIARIZATION**
ECHTZEITSPRECHERIDENTIFIKATION MIT DIARISIERUNG
IDENTIFICATION D'UN LOCUTEUR EN TEMPS RÉEL AVEC DIARISATION

(43) Date of publication of application: 25.03.2020
(73) Proprietor: Televic Conference NV, 8870 Izegem (BE)
(72) Inventor: DEMUYTERE, Pieter, B-9870 Olsene (BE); ROSEZ, Didier, B-8890 Dadizele (BE)
(74) Representative: IPLodge bv

(56) References cited:
- WO-A1-2016/022588
- US-A1- 2016 217 792
- US-B1- 6 424 946
- US-B1- 6 748 356

## Description

### Field of the Invention

The present invention relates to a system for real-time identification of speakers, such as speakers at a conference.

### Background

Conferences and meetings are often recorded in the form of an audio file. The speeches, discussions and participant interventions occurring at these conference and meetings and which are contained in this audio file can subsequently be transcribed to a text file, said text file being a text-based chat log of the conference. Systems for processing such conference audio recordings can furthermore make use of speaker identification software, so that each intervention during the conference can advantageously be attributed to the right speaker.

An important aspect of such a system using speaker identification software is that transcription is typically performed on the basis of a completed, recorded audio file, which file becomes available after the meeting. Example of such systems aimed at transcribing call centre conversations or mobile device conversations between two parties can be found in US 2014/0297280 and US 2015/0310863 respectively.

It is often useful for participants to a meeting or a conference to know the identity of the speaker at all times during the meeting, or as soon as possible after a speaker takes the floor. Sharing the identity of the speaker can help avoiding confusion as to whose opinion is being expressed. Although this may be clear in a meeting with a small number of participants, conferences can have hundreds of participants. However, identification of the current speaker is not always a straightforward process. Conference seats are not always equipped with a microphone or a display for every single participant, so that a straight link connecting a particular participant to a particular seat and its microphone cannot be made. It may therefore prove difficult to provide speaker identification in meetings where a limited number of microphones is shared among the participants. It is then not always clear who makes use of the microphone, given that participants can move through the conference room and make use of more than one microphone.

To solve this issue, it is known to use a voice recognition system, capable of "instant" voice recognition. The setup of such a system can be a cumbersome process and may involve asking every individually speaker to say a few words or standard lines to enable the voice recognition system to recognize interventions by said speaker. An example of such a system can be found in US 2009/0319269. An example of a voice tallying system using the physical location of the microphone with which a participant is associated can be found in WO 2016/022588 A1.

There therefore is a need for a speaker identification system that can be used during conferences wherein speakers can be identified in real-time and have their identity shared with the other participants, preferably without any significant intervention by the system operator, and preferably wherein new or first-time speakers can be identified with only a minimal intervention by a system user.

### Summary of the Invention

The invention is as defined in the appended independent claims.

Preferred embodiments are set forth in the dependent claims.

### Brief Description of the Figures

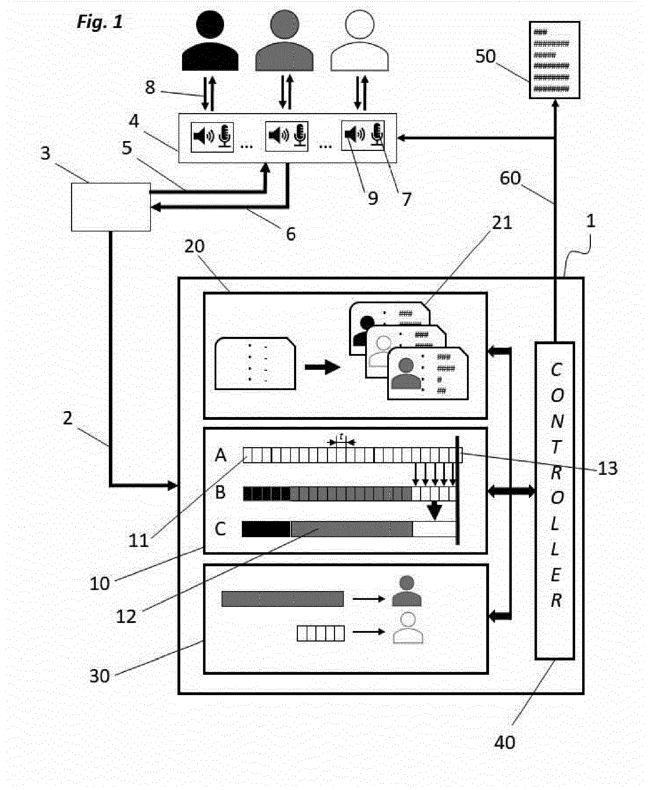

These and other features and advantages of embodiments of the present invention will now be described in more detail with reference to Figure 1, which schematically illustrates the system according to an embodiment of the present invention.

### Detailed Description of Embodiments

Figure 1 schematically illustrates a system **1** for real-time speaker identification with diarization, according to an embodiment of the present invention.

A specific application of the speaker identification system **1** described herein is the identification of speakers at a gathering of people, such as a meeting or a conference. Advantageously, said speaker identification can be carried out and shared with third parties, such as the participants to the conference, in an instantaneous way, meaning in real-time. Advantageously, said speaker identification is carried out by the system without interference by the system user, e.g. the system administrator, conference chairman or technical staff to the conference.

The number of conference participants can easily run into the hundreds. Participants often wish to know the identity of the person speaking during the conference, as soon as the identity of the speaker was established. This knowledge helps to keep the course of the event structured and well-organized. It is therefore important to notice whenever another speaker takes the floor, identify said other speaker and share this information in real-time with the other participants of the conference.

A direct microphone-participant link cannot always be made, as it is often the case that microphones are shared among participants. Frequently, use is made of a central speaker platform provided with a microphone that is used by a sequence of speakers. Microphones can also be placed on a plurality of positions in the conference room to allow participant interventions, for example to allow questions from the audience at the end of a presentation. In again other cases, microphones are passed around in the conference room and participants may also move around. Microphones may also be shared by more than one participant, for example when a microphone allotted to a participant fails and said participant is obliged to use a neighboring microphone. In all above cases, there is no direct link between a single participant and a single microphone, ruling out microphone identity as a basis for speaker identification.

It is a goal of embodiments of the invention to provide a system that is capable of identifying individual speakers at a meeting or a conference, wherein the identity of the person who is speaking can be communicated in real-time to the other participants of the meeting. Furthermore, it is a goal of embodiments of the invention to provide for a system capable of recognizing that a person yet unknown to the system has taken the floor (meaning that the system realizes that it is confronted with a voice it has not encountered yet), provide a way for identifying or naming such a new person and communicate his or her identity to other participants, with a minimal intervention by the user of the invention, such as the system operator. It is a further goal of embodiments of the invention to allow for future identification, for instance in a meeting or conference in the future, of an individual person that was added to the system, with a minimal intervention by the user of the system.

Advantageously, the features defining a person's voice characteristics can be stored by the system for future use. For this purpose, a pool is created containing individual speaker profiles, each profile being connected to an individual person participating to the conference or to a person having participated in a previous meeting where the system was used, and wherein each profile contains a set of parameters that define the individual person's voice. Advantageously, said pool, or plurality, of individual speaker profiles can be stored in a database, which can be used for future meetings and conferences, with the advantage that a speaker, already known to the system, will be identified by the system without the need for any action by the user of the system, or without the need for voice tests prior to the start of the meeting or prior to the intervention of the speaker during the meeting.

Referring now to Figure 1, a system **1** is provided, which system **1** is configured to receive at least one input audio data stream **2.** The at least one input audio data stream **2** represents an interaction between a plurality of individual speakers, which is typically a discussion between several participants at the conference. The at least one stream **2** can for example be the audio registration in the conference room.

Usually, said at least one input audio data stream **2** is provided by a central unit **3,** said central unit **3** providing also a plurality of conference terminals **4** with a first data stream **5,** which can include said at least one input audio data stream **2,** or a translation thereof, and optionally a video data stream. Said plurality of conference terminals **4** can provide the central unit with a second data stream **6,** which represent participant contributions, and which can form part of the at least one input audio data stream **2.**

A conference terminal refers here to a device used by a participant that allows following and intervening in ongoing discussions. It is typically equipped with at least one microphone **7** for capturing an audio data signal **8** from the participant, such as a spoken contribution to the discussion, and at least one speaker **9** or headphone (not shown on the figure) for receiving for example said at least one input audio data stream **2,** or a translation thereof, from the central unit **3** and for transmitting said stream **2,** or a translation thereof, to the participant.

System **1** further comprises a diarization unit **10** for segmenting said at least one input audio data stream **2** into speaker homogeneous audio segments **11,** said unit **10** being further provided to combine a sequence of consecutive speaker homogeneous audio segments **11** in a cluster **12.**

For the purpose of the invention, diarization of an audio signal containing speech refers to the process of segmenting an audio signal such as a multi-speaker audio stream, into speaker homogeneous segments **11.** The process typically further includes grouping sequential speaker homogeneous segments **11** in larger clusters, with the result that each cluster **12** is also speaker homogeneous.

It will be understood that diarization can also be applied to audio signals not containing any speech. In this case, diarization of an audio signal refers to the creation of clusters containing sound which is created by a single source and which does not necessarily contain speech. Such clusters may for instance contain silence, which may occur as gaps between speech, as well as noises, such as coughing, sneezing, a falling object hitting the floor, background noise, music and the like. For convenience of the conference participants, such a sound may be grouped into a separate cluster. In some cases, multiple conference participants will be talking at the same time. The diarization unit **10** will then typically receive more than one input audio data stream **2** each one of which will be sent to the diarization unit **10** separately. When being sent as one input data stream **2,** the audio signal will typically be grouped in a separate cluster group.

Algorithms are known in the state of the art to distinguish between and to separate the audio signal representing the voice of the speaker and any ambient or background noise. Noise reduction algorithms can be employed to improve the accuracy of the speaker identification.

Typically, a diarization unit **10** will, as it receives an incoming audio data stream **2,** divide this incoming stream in segments **11,** each segment having the same duration which can be a fixed predetermined period of time t (see bar A on Fig. 1 displaying a sequence of consecutive segments **11).** This process can happen in real-time as audio data **2** are received by the unit **10,** so that the moment the length of the incoming audio signal reaches said fixed period of time t, the received fragment of the incoming audio signal is split off to form an individual segment **11.** Subsequently, the process starts again until a new fragment of the incoming audio data with a predetermined period of time *t* is obtained, which can in its turn be split off and form a subsequent segment **11.** Figure 1 shows that a fragment **13** is being formed, the duration of which is not yet long enough to be split off as a separate segment **11.**

Said period of time *t,* indicating the duration of segment **11,** can be chosen in such a way that it is short enough to assume that the segment **11** is speaker-homogeneous, meaning that the source of the audio signal is one single speaker, yet long enough so that a parameter set defining voice characteristics can be derived from the segment **11,** allowing to link said segment **11** to a specific speaker, if known by the system **1.** Said predetermined period of time t that defines the formation of a new segment **11** is typically at least 5 milliseconds (ms), preferably at least 8 ms, more preferably at least 10 ms and most preferably at least 15 ms. It is further understood that said predetermined period of time t is at most 50 ms, preferably at most 40 ms, more preferably at most 30 ms, and most preferably at most 25 ms. Typically, said period of time twill be 20 ms.

It will however be understood that for some embodiments, said period of time t may exceed 50 ms, 100 ms or even 200 ms. This is particularly the case when longer-duration segments **11** are needed to extract features that are for instance not available from shorter-duration segments **11.** According to some embodiments, said period of time *t* may be a variable parameter during the diarization process, wherein *t* is e.g. varied so that a parameter set can be obtained that allows defining voice characteristics for the specific segment, therefore allowing comparison of said characteristics with those of other, previous segments **11.** Alternatively, said features will be extracted from a sequence of segments, each of said segments having a single duration *t.*

Every newly-formed segment **11** will subsequently be scrutinized by the unit **10** and added to the group containing the segment or segments which were split off and examined in the steps just before, if said scrutinized segment shares the same parameter values of the segments in the group, meaning that it is judged by the diarization unit **10** that the parameter values of the newly-formed segment **11** resemble those of the group containing the previously examined segments within an acceptable range. The segment **11** will thus be added to this group of previously examined segments when it is decided that it shares the same audio source, e.g. being produced by the same speaker. Bar B on Fig. 1 displays how the segments **11,** which are the results of dividing the incoming audio data stream **2,** have been reviewed for sharing the same parameter values as previous segments, resulting in sequences of varying numbers of segments sharing these same parameters (displayed with different greyscale).

If the diarization unit **10** finds that the parameter values of the newly-formed segment **11** do not correspond with the parameter values of the segments in the group, it will decide that the newly-formed segment is produced by a different source of sound, such as a different speaker. Consequently, the group containing the previous segments will be combined in chronological order to form a cluster **12** (see bar C on Fig. 1), said cluster containing segments **11** produced by a single source of sound, such as a single speaker, and a new, empty group will be created, to which the newly-formed segment will be added.

System **1** further comprises a speaker profile unit **20** comprising a plurality of individual speaker profiles **21.** Each individual speaker profile **21** corresponds to an individual speaker and contains values for a first set of parameters obtained on the basis of extracted data of a speaker's voice, which parameters enable to characterize said individual speaker's voice. The speaker profile unit **20** further comprises means for adjusting any individual speaker profile **21** of said plurality. According to embodiments of the invention, the speaker profile unit **20** further comprises means for creating an individual speaker profile **21** and for adding said profile to said plurality. Thus, each individual speaker profile **21** of said plurality corresponds to an individual person, and contains values for a first set of parameters, said values being specific for the individual person's voice. An individual speaker profile **21** thus links the name or identity of a person to said first set of parameters, which is representative for the person's voice. It is known that acoustic patterns differ between voices of individuals, said patterns reflecting both anatomy (such as the physical shape and size of the vocal tract, throat and mouth) and learned behavioral patterns (such as voice pitch and speaking style). Such acoustic patterns can be expressed by said first set of patterns.

Voice biometrics, referring here to measurement and analysis of voice patterns as a means of verifying personal identity, can be used in the form of said first set of parameters to characterize and catalogue the voice of an individual speaker, distinguish between individual persons, and serve as a basis to identify an individual person.

A second set of parameters can be defined, for which values can be derived for every segment **11,** said second parameter set characterizing the voice in the speaker-homogeneous segment **11.** Preferably, the diarization unit **10** is configured for extracting said second set of parameters. The parameters in said second parameter set, selected for characterizing the voice in a speaker-homogeneous segment **11,** correspond to the parameters in said first parameter set, selected for characterizing a person's voice in said individual speaker profile **21,** meaning that values of one set can be "translated" to values of the other set for the purpose of finding a possible match. Preferably, the parameters that occur in the first set and the second set are the same.

Said second set of parameters, although derived from a short segment **11,** is sufficient to allow a rapid identification of the speaker by comparing the values obtained for said second parameter set with values for first parameter sets of the pool (or plurality) of individual speaker profiles **21,** if the speaker is known by the system **1** and is part of the pool of individual speaker profiles **21.**

As discussed here above, values for some parameters can only be extracted for longer-duration segments, or for a sequence of segments. Therefore, some values may only become available with a certain delay. According to embodiments of the invention, a parameter may require the evaluation of a sequence of segments. One example may be speaking rate, which may need a up to a few seconds to determine. It will be clear that use of such a parameter may delay identification of a speaker.

It is an advantage of the present invention that said second set of parameters can be obtained without the need for the speaker to pronounce a specific word or sequence of words, as is often the case for speaker identification systems. Speaker recognition according to the invention is thus text-independent. Consequently, the speaker does not have to repeat a prompted phrase that is programmed in the system. This saves time for both the participants and the technical staff or system administrator, who do not need to pre-record the voice of every participant before the start of the meeting.

As values for said second set of parameters are extracted for every new segment **11,** said values, once they become available, can be compared with values for previous segments. As mentioned here above, if said values for a segment **11** are found to correspond to values of the segments just before, then this segment will be added to the group containing said previous segments.

For obtaining said second set of parameters, spectral analysis of the audio signal is typically used. The first and/or second set of parameters may comprise or make use of at least some of the following parameters: vocal range (defined here as the measure of the breadth of the pitch of the individual speaker's voice), intonation (referring here to the way the pitch of the voice rises and falls), intensity (referring here to natural volume of the person), speaking rate, prosody (referring here to patterns of speech such as the variation of the length and accentuation of the words).

Algorithms for the quantification of voice characteristics are known in the state of the art. Such algorithms include frequency estimation, hidden Markov models, Gaussian mixture models, pattern matching algorithms, neural networks, matrix representation, Vector Quantization and decision trees. It is however noted that not all algorithms mentioned here can be applied to text-independent speaker identification.

Once a speaker who is "new" to the system **1** in the sense that said speaker has never spoken at a conference where system **1** was used, has been defined by a corresponding first set of parameters and an individual speaker profile **21** is created, said profile **21** can be stored to said pool or plurality of individual speaker profiles. Advantageously, the individual speaker profile **21** can be used for future meetings or conferences, so that there is no need for i.e. any vocal tests and/or manually adding each speaker prior to the start of the meeting.

System **1** further comprises an identification unit **30** for assigning speaker-homogeneous audio segments **11** and/or clusters **12** to an individual speaker, by use of said plurality of individual speaker profiles **21.**

According to an embodiment of the present invention, the diarization unit **10** is provided with a means to extract from each segment **11** values for said second set of parameters, characterizing the voice of segment **11,** thereby delivering a "voice print" for said particular segment **11.** Said second set of parameters corresponds or is equal to the first set of parameters which is part of an individual speaker profile.

The identification unit **30** is configured to compare values derived for the second parameter set of a particular segment **11** with the values of said first parameter set defining profiles stored in said plurality of individual speaker profiles **21.** If a match occurs between the second set of parameters of the particular segment **11** and a first set of parameters as stored in a particular individual speaker profile **21,** then the system will return the speaker linked to that profile as speaker and source of that particular segment **11.**

Alternatively, the identification unit **30** is provided with a means to extract values for said second parameter set for segments **11** or clusters **12.**

As such, the identification unit **30** is configured to combine the output and results of the diarization unit **10,** (recognizing whether the same speaker is speaking), with information from the plurality of individual speaker profiles **21** (recognizing who is speaking).

The system **1** further comprises a controller **40.** According to embodiments, said controller **40** is configured to steer diarization by the diarization unit **10** of an incoming audio signal or input audio data stream **2,** to overview identification of the current speaker of said incoming audio signal **2** by said identification unit **30** by use of said plurality of individual speaker profiles **21,** to oversee the adjustment and updating of parameter values for said first set of parameters for individual speaker profiles **21** and/or, when the speaker of the incoming signal has been identified, to signal **60** the identity of said speaker to the participants of the conference.

An advantage of the present invention is that participants to the meeting can be informed of the speaker's identity once the speaker has been identified. For this, a match has to be found between values derived for the second set of parameters of the incoming segment **11** and the profiles contained in the plurality of individual speaker profiles **21.**

A second set of parameters can be obtained for a segment **11** once it is split off. The diarization unit **10** can indeed extract said second set of parameters for any segment **11** once it is split off as a separate segment. Said second set of parameters can then directly be compared with the first parameter sets contained in the plurality of individual speaker profiles **21.** All in all, if the speaker is known by the system **1,** a match will typically be found within a period of time, allowing to inform the participants of the speaker identity, while the speaker is still speaking.

It is an advantage of the invention that the identity of the speaker can be found and shared in real-time.

For the purpose of the invention, the term "real-time" refers to the production of a system response without a significant time delay, i.e. within a short enough amount of time that the end users of the system, i.e. participants to a conference, receives the system's response in an interactive fashion, meaning that the same user may still be speaking.

According to embodiments of the invention, for the purpose of speaker identification, the controller **40** may decide to rely on a sequence of consecutive segments **11** rather than on an individual segment **11** in order to guarantee that a correct identification is delivered, within an acceptable period of time. Only when disposing of such a sequence, will the controller decide to allow searching for a match between the parameter values obtained for said segment **11** sequence and the profiles of said plurality of individual speaker profiles **21.**

According to embodiments of the invention, the identity of the speaker is shared with the other participants to the meeting, within 2 seconds, preferably with 1 second, more preferably within 0.75 seconds, and even more preferably within 0.5 seconds, with reference to the beginning of the speaker's intervention. Said beginning of the speaker's intervention is marked by the first segment **11** that can be attributed to said speaker.

The participants can be informed of the identity of the speaker by use of the conference terminal, i.e. by projecting the name of the speaker on a screen of the conference terminal, or by projecting the identity of the speaker on a central spot, such a big screen in the conference hall.

According to certain embodiments, obtaining values for said second set of parameters for the most recent segment **11** that was formed, or for a segment sequence, and trying to match said values with the profiles of said plurality of individual speaker profiles **21** can be a continuous process, the result of which is immediately and continuously shared with the participants of the meeting. Alternatively, only when a change in speaker is noticed by the actions and decisions of the diarization unit **10,** identification unit **30** and the controller **40,** the newly extracted second set of parameters is compared with the profiles of said plurality of individual speaker profiles **21.**

According to an advantageous embodiment, the controller **40** is further configured to, preferably continuously, adjust and refine values for said speaker-specific first set of parameters belonging to an individual speaker profile in said plurality of individual speaker profiles **21.** Said adjustment is done by comparing said values with values derived for said second set of parameters on the basis of recent segments **11** and/or clusters **12,** said segments and/or clusters having been attributed to said individual speaker. Typically, the controller **40** instructs the means for adjusting any individual speaker profile **21** of said plurality to adjust and update parameter values for the first set of parameters for an individual speaker profile **21** by use of a second set of parameters. This second set of parameters is derived from an intervention of the individual speaker the profile corresponds to by use of a conference terminal or conference microphone.

Indeed, although a speaker may already have been added to the database of speaker profiles and should be identifiable, human voices change over time i.e. due to ageing. In the long run, these changes may impact the chances for a correct speaker identification.

According to embodiments of the invention, system **1** is provided with an algorithm wherein the voice characterization parameters contained in the first set of parameters of a profile of an individual person, may be adjusted and updated on the basis of parameters extracted during more recent interventions by the speaker. Said algorithm may comprise a machine-learning, self-adaptive model, which can thereby make use of statistical methods, such as weighted averages of historical and new data, wherein more weight is given to more recent measured parameters.

Preferably, said machine-learning model is programmed to distinguish between long-term changes in the voice, i.e. due to ageing, and short-term influences, wherein the voice temporarily changes its characteristics due to a temporary condition, such as a cold or an illness.

According to advantageous embodiments of the invention, the parameters contained in the profiles are adjusted and updated, under the conditions mentioned here above, whenever the speakers of said profiles intervene. Said plurality of individual speaker profiles **21** thereby refers to a database, containing voice characteristics under the form of a first set of parameters of any person having intervened in a conference where the system was used, said database expanding whenever a new speaker has to be added.

According to embodiments of the invention, the system **1** has a safety algorithm that requires confirmation, e.g. by the system administrator, thereby getting permission to adjust and update values for said first set of parameters for an individual speaker.

Said controller **40** can further be configured to provide a conversion to text of the words spoken during the discussion, which converted text **50** can be shared with the participants to the meeting. Thus, in addition to speaker diarization and speaker recognition, the system can also provide for speech recognition, referring here to the ability of a machine to convert spoken language to text. Speech-to-text is known in the state of the art. It is an advantage of the system according to the invention that text reproducing the discussions, can be provided when the meeting is still ongoing, as the speaker for every intervention is known.

Without limiting the invention to this embodiment, a typical use of the system according to the invention will now be described with reference to Figure 1.

The at least one input audio data stream **2** refers to a representation of the discussions during the meeting, thereby making use of a central microphone, which is shared by a sequence of speakers. Whenever a participant makes a new intervention in the discussion, the diarization unit **10,** creating sequences of segments **11** with a predetermined period of time t and extracting a second set of parameters thereof, said parameters being characteristic for the voice of the speaker, will notice the change in speaker, close the until then open group of previously added segments **11** to form a cluster **12,** and start a new group with the latest segment **11.**The diarization unit **10** then extracts said second parameter set for said latest segment **11.**

The identification unit **30** will match said extracted second parameter set belonging to the latest segment **11** with stored sets of parameters in the plurality of individual speaker profiles **21** of the speaker profile unit **20,** said plurality being a database containing voice biometrics of all speakers that have already been registered by the system **1.** Alternatively, more than one segment **11** may be used for extracting said second set of parameters.

In case the speaker is known by the system **1,** controller **40** will send a signal **60** to the participants sharing the identity of the speaker. This means that even when a speaker is intervening for the first time during the meeting, his or her identity may already be known, which is the case if said speaker was already added to the system **1,** e.g. during a previous meeting. This means that a speaker who is already known by system **1** will be automatically be recognized and have his or her identity shared with the other participants. Advantageously, system **1** is provided to build and have access to an only expanding database of voice imprints.

In case the speaker is unknown to the system **1,** the controller **40** instructs said means for creating an individual speaker profile **21** to create an individual speaker profile **21** by use of said extracted second set of parameters, and to add said profile to said plurality. A new profile is thus made and added to said plurality of individual speaker profiles **21,** on the basis of voice characteristics parameters, extracted from the incoming audio data stream **2.** Said new profile thus links the individual person to a set of parameters that are representative for his voice.

The system **1** will add said new person taking the floor for the first time to said profile database by first noting that a new speaker is intervening in the discussion, creating a new profile for said new speaker, measure the particularities of the new speaker's voice and add a first set of parameters to said new profile, said first set being defining the new person's voice.

Said profile subsequently has to be linked to the name of the speaker.

According to embodiments of the invention, the user of system **1,** such as the system operator or technical staff, can manually add the name of the new speaker, thereby linking the speaker to the new profile in the pool of individual speaker profiles **21.** Alternatively, the system 1 can propose a name and the system user subsequently has to authorize or refuse the name proposed by the system 1.

According to preferred embodiments, conference terminals or microphones can be provided with a device, which is interoperable with the system 1 by use of a conference terminal or conference microphone. Without limiting thereto, devices can be a beacon, for interacting with a tag, a badge, a card, a printed tag for use with an optical scanner or a ring. Preferably, said tag is person-specific, meaning that any person expected to intervene in the discussion, can be provided with a personal tag. Said tag can interact with the device of the conference terminal, which can activate i.e. the microphone of the conference terminal, giving the person the tag belongs to the possibility to intervene in the discussions. Advantageously, the tag links the name and identity of the person carrying the tag to the voice characteristics that are derived during the person's first intervention. Consequently, by using the tag, the system **1** knows who is intervening in the discussion and thus who the voice belongs to.

As such, values for said first set of parameters for a profile of an individual person are derived from interventions of said person when said person intervenes during a conference after "logging in", preferably by use of said interoperable device and a conference terminal.

According to embodiments of the present invention, said unidentified speaker is asked to connect or log-in to said system **1** by means of biometric authentication method. Without limiting the invention thereto, said biometric authentication is selected from the list composed of fingerprint identification, hand geometry authentication, palm vein authentication, iris scan authentication, retina scan authentication and face recognition. Consequently, said biometric authentication method can be used to identify said unidentified speaker.

According to embodiments of the present invention, said unidentified speaker is asked to connect or log-in to said system **1** by means of providing a code. Said code is provided to said unidentified speaker and is typically not known to other participants, thus providing a way of identifying the yet unidentified speaker. Without limiting the invention thereto, said code is selected from the list composed of pin code, password or username/password pair.

According to alternative embodiments, conference participants have assigned seats. This is typically done in parliaments or town councils. The system **1** will then propose to link a name and identity to the created speaker profile **21** on the basis of the microphone the intervention was recorded, said microphone being linked to an assigned seat. Such a proposal may be subject to authorization of a system user, preferably the conference chairman or system administrator.

The present invention also pertains to a computer program, optionally stored on a computer-readable medium, comprising code means adapted to cause a processor to perform the functions of the controller **40** as described above.

While the invention has been described hereinabove with reference to specific embodiments, this is done to illustrate and not to limit the invention, the scope of which is defined by the accompanying claims. The skilled person will readily appreciate that different combinations of features than those described herein are possible.

## Claims

1. A system (1) for real-time identification of conference speaker identity, the system being configured to receive at least one input audio data stream (2) representing an interaction between a plurality of individual speakers; wherein the system (1) comprises
- a diarization unit (10) for segmenting said at least one input audio data stream (2) into speaker- homogenous audio segments (11); and for combining a sequence of consecutive speaker homogenous audio segments (11) in a cluster (12);
- a speaker profile unit (20) comprising a plurality of individual speaker profiles (21), each profile (21) corresponding to an individual speaker and containing values for a first set of parameters, said parameters enabling to characterize said individual speaker's voice; the speaker profile unit (20) further comprising means for adjusting any individual speaker profile (21) of said plurality; wherein the speaker profile unit (20) further comprises means for creating an individual speaker profile (21) and for adding said profile to said plurality, and
- an identification unit (30) for assigning said speaker-homogenous audio segments (11) to an individual speaker;
wherein
the diarization unit (10) is further configured to derive for an audio segment (11) or a cluster (12) values for a second set of parameters, said parameters characterizing the voice in the speaker-homogeneous segment (11);
and wherein
said system further comprises a controller (40) which is configured for monitoring diarization of said at least one data stream (2) by said diarization unit (10), for controlling speaker identification of said segments (11) and/or clusters (12) by said identification unit (30) by use of said plurality of individual speaker profiles (21), and for sharing said conference speaker identity, wherein the controller (40) instructs said means for creating an individual speaker profile (21) to create an individual speaker profile (21) by use of a second set of parameters, and to add said profile to said plurality, under the condition that no correspondence can be found between said second set of parameters and a first set of parameters of any profile (21) of said plurality, wherein the controller (40) is further configured to connect said created individual speaker profile (21) to a name or identity provided to the controller,
wherein the system (1) will propose to link a name and identity to the created speaker profile (21) on the basis of the microphone through which the intervention was recorded, said microphone being linked to an assigned seat, and the conference participant having an assigned seat.

2. The system according to claim 1, wherein said first and second set contain the same parameters.

3. The system according to claim 1 or claim 2, wherein said controller (40) is further configured to instruct said means for adjusting any individual speaker profile (21) of said plurality to adjust and update parameter values for said first set of parameters for an individual speaker profile (21) by use of a second set of parameters, wherein said adjustment is done by comparing said values with values derived for said second set of parameters on the basis of recent segments (11) and/or clusters (12), said segments and/or clusters having been attributed to said individual speaker.

4. The system according to claim 3, wherein values for said first set of parameters of a profile of an individual person are adjusted by use of a machine-learning model.

5. Method for adding and identifying an unidentified speaker to a system (1) comprising a diarization unit (10), a speaker profile unit (20) for storing a plurality of individual speaker profiles (21), and a controller (40),
said method comprising the following steps:
diarizing at least one input audio data stream (2) by use of said diarization unit (10) into speaker-homogenous audio segments (11), said at least one input audio data stream (2) representing an intervention of said unidentified speaker by use of a conference terminal;
using said diarization unit (10) to retrieve from said speaker-homogenous audio segments (11) or sequence of consecutive segments a second set of parameters;
creating at said speaker profile unit (20) a new individual speaker profile (21) by use of said second set of parameters and adding said profile to said plurality of individual speaker profiles (21); and
using said controller (40) to connect said created individual speaker profile (21) to a provided name or identity;
wherein the system (1) will propose to link a name and identity to the created speaker profile (21) on the basis of the microphone through which the intervention was recorded, said microphone being linked to an assigned seat, and the conference participant having an assigned seat.

6. The method according to claim 5, wherein said unidentified speaker is asked to connect to said system (1) by means of biometric authentication method, wherein said biometric authentication is selected from the list composed of fingerprint identification, hand geometry, palm vein authentication, iris scan, retina scan and face recognition.

7. The method according to claim 5, wherein said unidentified speaker is asked to connect to said system (1) by means of providing a code identifying said speaker, wherein said code is selected from the list composed of pin code, password or username/password pair.

8. A computer program product comprising code means configured to cause a processor to perform the functions of the system (1) according to any one of claims 1-4.

## Patentansprüche

1. System (1) zur Echtzeitidentifizierung einer Konferenzsprecheridentität, wobei das System eingerichtet ist, mindestens einen Eingangsaudiodatenstream (2) zu empfangen, der eine Interaktion zwischen mehreren einzelnen Sprechern darstellt; wobei das System (1) aufweist:
- eine Diarisierungseinheit (10) zum Segmentieren des mindestens einen Eingangsaudiodatenstreams (2) in sprecherhomogene Audiosegmente (11); und zum Kombinieren einer Sequenz aufeinander folgender sprecherhomogener Audiosegmente (11) zu einem Cluster (12);
- eine Sprecherprofileinheit (20), aufweisend mehrere einzelne Sprecherprofile (21), wobei jedes Profil (21) einem einzelnen Sprecher entspricht und Werte für einen ersten Satz Parameter enthält, wobei die Parameter es ermöglichen, die Stimme des einzelnen Sprechers zu kennzeichnen; die Sprecherprofileinheit (20) ferner aufweisend Mittel zum Anpassen jedes einzelnen Sprecherprofils (21) der mehreren Profile; wobei die Sprecherprofileinheit (20) ferner Mittel aufweist, um ein einzelnes Sprecherprofil (21) zu erstellen und um das Profil zu den mehreren Profilen hinzuzufügen, und
- eine Identifizierungseinheit (30) zum Zuweisen der sprecherhomogenen Audiosegmente (11) zu einem einzelnen Sprecher;
wobei
die Diarisierungseinheit (10) ferner eingerichtet ist, für ein Audiosegment (11) oder einen Cluster (12) Werte für einen zweiten Satz Parameter abzuleiten, wobei die Parameter die Stimme in einem sprecherhomogenen Segment (11) kennzeichnen;
und wobei
das System ferner einen Controller (40) aufweist, der eingerichtet ist, um die Diarisierung des mindestens einen Datenstreams (2) durch die Diarisierungseinheit (10) zu überwachen, die Sprecheridentifizierung der Segmente (11) und/oder Cluster (12) durch die Identifizierungseinheit (30) durch Nutzung der mehreren einzelnen Sprecherprofile (21) zu steuern und um die Konferenzsprecheridentität zu teilen, wobei der Controller (40) das Mittel zum Erstellen eines einzelnen Sprecherprofils (21) anweist, durch Nutzung eines zweiten Satzes Parameter ein einzelnes Sprecherprofil (21) zu erstellen und das Profil zu den mehreren Profilen hinzuzufügen, unter der Bedingung, dass keine Entsprechung zwischen dem zweiten Satz Parameter und einem ersten Satz Parameter eines Profils (21) der mehreren Profile zu finden ist, wobei der Controller (40) ferner eingerichtet ist, das erstellte einzelne Sprecherprofil (21) mit einem Namen oder einer Identität zu verbinden, der oder die an den Controller bereitgestellt wird,
wobei das System (1) vorschlägt, einen Namen und eine Identität mit dem erstellten Sprecherprofil (21) auf Grundlage des Mikrofons zu verknüpfen, durch das der Eingriff aufgenommen wurde, wobei das Mikrofon mit einem zugewiesenen Sitz verknüpft ist und der Konferenzteilnehmer einen zugewiesenen Sitz hat.

2. System nach Anspruch 1, wobei der erste und der zweite Satz dieselben Parameter enthalten.

3. System nach Anspruch 1 oder Anspruch 2, wobei der Controller (40) ferner eingerichtet ist,
das Mittel zum Anpassen eines einzelnen Sprecherprofils (21) der mehreren Profile anzuweisen, Parameterwerte für den ersten Satz Parameter für ein einzelnes Sprecherprofil (21) durch Nutzung eines zweiten Satzes Parameter anzupassen und zu aktualisieren, wobei die Anpassung durch Vergleichen der Werte mit Werten, die für den zweiten Satz Parameter auf Grundlage kürzlicher Segmente (11) und/oder Cluster (12) abgeleitet sind, erfolgt, wobei die Segmente und/oder Cluster dem einzelnen Sprecher zugeordnet wurden.

4. System nach Anspruch 3, wobei Werte für den ersten Satz Parameter eines Profils einer einzelnen Person durch Nutzung eines Maschinenlernmodells angepasst werden.

5. Verfahren zum Hinzufügen und Identifizieren eines nicht identifizierten Sprechers zu einem System (1), das eine Diarisierungseinheit (10), eine Sprecherprofileinheit (20) zum Speichern der mehreren einzelnen Sprecherprofile (21) und einen Controller (40) umfasst,
wobei das Verfahren die folgenden Schritte umfasst:
Diarisieren von mindestens einem Eingangsaudiodatenstream (2) durch Nutzung der Diarisierungseinheit (10) in sprecherhomogenen Audiosegmenten (11), wobei der mindestens eine Eingangsaudiodatenstream (2) einen Eingriff des nicht identifizierten Sprechers durch Nutzung eines Konferenz-Endgeräts darstellt; Nutzen der Diarisierungseinheit (10) zum Abrufen eines zweiten Satzes Parameter von den sprecherhomogenen Audiosegmenten (11) oder der Sequenz aufeinanderfolgender Segmente eines zweiten Satzes Parameter;
Erstellen eines neuen einzelnen Sprecherprofils (21) an der Sprecherprofileinheit (20) durch Nutzen des zweiten Satzes Parameter und Hinzufügen des Profils zu den mehreren einzelnen Sprecherprofilen (21); und
Nutzen des Controllers (40) zum Verbinden des erstellten einzelnen Sprecherprofils (21) mit einem bereitgestellten Namen oder einer Identität;
wobei das System (1) vorschlägt, einen Namen und eine Identität mit dem erstellten Sprecherprofil (21) auf Grundlage des Mikrofons zu verknüpfen, durch das der Eingriff aufgenommen wurde, wobei das Mikrofon mit einem zugewiesenen Sitz verknüpft ist und der Konferenzteilnehmer einen zugewiesenen Sitz hat.

6. Verfahren nach Anspruch 5, wobei der nicht identifizierte Sprecher gebeten wird, sich mittels eines biometrischen Authentifizierungsverfahrens mit dem System (1) zu verbinden, wobei die biometrische Authentifizierung aus der Liste aus Fingerabdruckidentifizierung, Handgeometrie, Handflächenvenenauthentifizierung, Irisscan, Retinascan und Gesichtserkennung gewählt wird.

7. Verfahren nach Anspruch 5, wobei der nichtidentifizierte Sprecher gebeten wird, sich mittels Bereitstellens eines Codes, der den Sprecher identifiziert, mit dem System (1) zu verbinden, wobei der Code aus der Liste aus Pincode, Passwort oder Benutzername-/Passwortpaar gewählt wird.

8. Computerprogrammprodukt, aufweisend Codemittel, die eingerichtet sind, einen Prozessor zu veranlassen, die Funktionen des Systems (1) nach einem der Ansprüche 1 bis 4 auszuführen.

## Revendications

1. Système (1) pour une identification en temps réel de l'identité d'un intervenant lors d'une conférence, le système étant configuré pour recevoir au moins un flux de données audio d'entrée (2) représentant une interaction entre une pluralité d'intervenants individuels ; dans lequel le système (1) comprend :
- une unité de diarisation (10) pour segmenter ledit au moins un flux de données audio d'entrée (2) en segments audio homogènes (11) par intervenant ; et pour combiner une séquence de segments audio homogènes consécutifs (11) par intervenant dans un groupe (12) ;
- une unité de profil d'intervenant (20) comprenant une pluralité de profils d'intervenants individuels (21), chaque profil (21) correspondant à un intervenant individuel et contenant des valeurs pour un premier ensemble de paramètres, lesdits paramètres permettant de caractériser la voix dudit intervenant individuel ; l'unité de profil d'intervenant (20) comprenant en outre des moyens pour ajuster tout profil d'intervenant individuel (21) de ladite pluralité ; dans laquelle l'unité de profil d'intervenant (20) comprend en outre des moyens pour créer un profil d'intervenant individuel (21) et pour ajouter ledit profil à ladite pluralité, et
- une unité d'identification (30) pour attribuer lesdits segments audio homogènes (11) par orateur à un intervenant individuel ;
dans lequel
l'unité de diarisation (10) est en outre configurée pour obtenir, pour un segment audio (11) ou un groupe (12), des valeurs pour un second ensemble de paramètres, lesdits paramètres caractérisant la voix dans le segment audio homogène (11) par orateur ;
et dans lequel
ledit système comprend en outre un dispositif de commande (40) qui est configuré pour surveiller la diarisation dudit au moins un flux de données (2) par ladite unité de diarisation (10), pour commander l'identification d'intervenant desdits segments (11) et/ou groupes (12) par ladite unité d'identification (30) au moyen de ladite pluralité de profils d'intervenants individuels (21), et pour partager ladite identité d'intervenant de la conférence, dans lequel le dispositif de commande (40) ordonne auxdits moyens de création d'un profil d'intervenant individuel (21) de créer un profil d'intervenant individuel (21) au moyen d'un second ensemble de paramètres, et pour ajouter ledit profil à ladite pluralité, à la condition qu'aucune correspondance ne puisse être trouvée entre ledit second ensemble de paramètres et un premier ensemble de paramètres de n'importe quel profil (21) de ladite pluralité, dans lequel le dispositif de commande (40) est en outre configuré pour relier ledit profil d'intervenant individuel créé (21) à un nom ou une identité fournis au dispositif de commande,
dans lequel le système (1) va proposer de lier un nom et une identité au profil d'intervenant créé (21) sur la base du microphone par l'intermédiaire duquel l'intervention a été enregistrée, ledit microphone étant lié à un siège attribué, et le participant à la conférence ayant un siège attribué.

2. Système selon la revendication 1, dans lequel lesdits premier et second ensembles contiennent les mêmes paramètres.

3. Système selon la revendication 1 ou la revendication 2, dans lequel ledit dispositif de commande (40) est en outre configuré pour ordonner auxdits moyens d'ajustement de tout profil d'intervenant individuel (21) de ladite pluralité d'ajuster et de mettre à jour des valeurs de paramètres pour ledit premier ensemble de paramètres pour un profil d'intervenant individuel (21) au moyen d'un second ensemble de paramètres, dans lequel ledit ajustement est effectué en comparant lesdites valeurs à des valeurs obtenues pour ledit second ensemble de paramètres sur la base de segments (11) et/ou groupes (12) récents, lesdits segments et/ou groupes ayant été attribués audit intervenant individuel.

4. Système selon la revendication 3, dans lequel des valeurs pour ledit premier ensemble de paramètres d'un profil d'une personne individuelle sont ajustées au moyen d'un modèle d'apprentissage automatique.

5. Procédé pour ajouter et identifier un intervenant non identifié à un système (1) comprenant une unité de diarisation (10), une unité de profil d'intervenant (20) pour stocker une pluralité de profils d'intervenants individuels (21), et un dispositif de commande (40),
ledit procédé comprenant les étapes suivantes :
la diarisation d'au moins un flux de données audio d'entrée (2) au moyen de ladite unité de diarisation (10) en segments audio homogènes (11) par orateur, ledit au moins un flux de données audio d'entrée (2) représentant une intervention dudit intervenant non identifié au moyen d'un terminal de conférence ;
l'utilisation de ladite unité de diarisation (10) pour récupérer un second ensemble de paramètres à partir desdits segments audio homogènes (11) par orateur ou à partir d'une séquence de segments ;
la création au niveau de ladite unité de profil d'intervenant (20) d'un nouveau profil d'intervenant individuel (21) au moyen dudit second ensemble de paramètres et l'ajout dudit profil à ladite pluralité de profils d'intervenants individuels (21) ; et
l'utilisation dudit dispositif de commande (40) pour relier ledit profil d'intervenant individuel créé (21) à un nom ou une identité fournis ;
dans lequel le système (1) va proposer de lier un nom et une identité au profil d'intervenant créé (21) sur la base du microphone par l'intermédiaire duquel l'intervention a été enregistrée, ledit microphone étant lié à un siège attribué, et le participant à la conférence ayant un siège attribué.

6. Procédé selon la revendication 5, dans lequel ledit intervenant non identifié est invité à se connecter audit système (1) au moyen d'un procédé d'authentification biométrique, dans lequel ledit procédé d'authentification biométrique est sélectionné dans la liste composée d'une identification par empreinte digitale, d'une géométrie de la main, d'une authentification par veine de la paume, d'un scan de l'iris, d'un scan de la rétine et d'une reconnaissance faciale.

7. Procédé selon la revendication 5, dans lequel ledit intervenant non identifié est invité à se connecter audit système (1) au moyen de la fourniture d'un code identifiant ledit intervenant, dans lequel ledit code est sélectionné dans la liste composée d'un code PIN, d'un mot de passe ou d'un couple nom d'utilisateur/mot de passe.

8. Produit formant programme informatique comprenant des moyens formant code configurés pour amener un processeur à effectuer les fonctions du système (1) selon l'une quelconque des revendications 1 à 4.
